(19) Europäisches Patentamt / European Patent Office / Office européen des brevets

(11) **EP 4 414 403 A1**

(12) **EUROPEAN PATENT APPLICATION**
published in accordance with Art. 153(4) EPC

(43) Date of publication:
**14.08.2024 Bulletin 2024/33**

(21) Application number: **22878737.0**

(22) Date of filing: **06.09.2022**

(51) International Patent Classification (IPC):
*C08G 63/00* (2006.01)     *C08L 67/03* (2006.01)
*C08J 5/18* (2006.01)

(52) Cooperative Patent Classification (CPC):
**C08G 63/00; C08J 5/18; C08L 67/03;** Y02W 30/62

(86) International application number:
**PCT/KR2022/013303**

(87) International publication number:
**WO 2023/058916 (13.04.2023 Gazette 2023/15)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **08.10.2021 KR 20210134220**

(71) Applicant: **SK Chemicals Co., Ltd.
Seongnam-si, Gyeonggi-do 13494 (KR)**

(72) Inventors:
• **HWANG, Da-Young
  Seongnam-si, Gyeonggi-do 13494 (KR)**
• **KIM, Sangwoo
  Seongnam-si, Gyeonggi-do 13494 (KR)**
• **KIM, Ha-Neul
  Seongnam-si, Gyeonggi-do 13494 (KR)**
• **LEE, Boo-Youn
  Seongnam-si, Gyeonggi-do 13494 (KR)**

(74) Representative: **Berggren Oy
P.O. Box 16
Eteläinen Rautatiekatu 10A
00101 Helsinki (FI)**

(54) **POLYESTER COPOLYMER HAVING IMPROVED EXTRUSION PROCESSABILITY, COMPRISING RECYCLED MONOMER**

(57)     This invention relates to polyester copolymer comprising recycle monomers and having improved extrusion processability, and a preparation method thereof and an article comprising the same.

EP 4 414 403 A1

## Description

### [Technical Field]

The present disclosure relates to polyester copolymer comprising recycle monomers and having improved extrusion processability, and a preparation method thereof and an article comprising the same.

### [Background Art]

Polyester has excellent mechanical strength, heat resistance, transparency and gas barrier property, and thus, is most suitable as material of beverage containers, packaging films, audio/video films, and the like, and is being used in large quantities. Further, it is being widely produced worldwide as industrial material such as medical fiber or tire cord, and the like. Since a polyester sheet or plate has good transparency and excellent mechanical strength, it is being widely used as materials of cases, boxes, store shelves, protection panels, blister packaging, building materials, interior and exterior materials, and the like.

Meanwhile, as waste plastic responsible for about 70% of marine pollution has become a serious social problem, every country regulates the use of disposable plastic, and simultaneously, plans to reuse waste plastic. A method for reusing waste plastic may be largely classified in two methods, one collects, grinds and cleans waste plastic, followed by melt extrusion and re-pelletization, and uses it as raw material, and the other uses material obtained by depolymerization of waste plastic as monomers for synthesis of plastic. In the latter case, bis-2-hydroxyethyl terephthalate may be obtained by depolymerization of PET or PETG among waste plastic, and using the same as monomers of polyester copolymer is being studied.

However, due to foreign substances in waste plastic, it is difficult to obtain satisfactory material, and particularly, plastic prepared from material obtained by depolymerization of waste plastic often generates quality deterioration. Particularly, in case the quality of plastic is deteriorated, the qualities of articles prepared by extrusion processing may be inevitably deteriorated.

Thus, the inventors confirmed that the qualities of polyester copolymer prepared from materials obtained by depolymerization of waste plastic can be improved, particularly extrusion processability can be improved, by using recycled bis-2-hydroxyethyl terephthalate as monomers of polyester copolymer, but controlling the amounts of other monomers used as described later, and completed the present disclosure.

## [DETAILED DESCRIPTION OF THE INVENTION]

### [Technical Problem]

Is it an object of the present disclosure to provide polyester copolymer comprising recycle monomers and having improved extrusion processability, and a preparation method thereof and an article comprising the same.

### [Technical Solution]

In order to achieve the object, according to the present disclosure, there is provided polyester copolymer polymerized from

1) recycled bis-2-hydroxyethylterephthalate,
2) acid comprising dicarboxylic acid or derivatives thereof, and
3) diol comprising ethylene glycol and comonomers, and

having a structure in which a part derived from the bis-2-hydroxyethylterephthalate, an acid part derived from the dicarboxylic acid or derivatives thereof, and a diol part derived from the diol are repeated,
wherein the polyester copolymer has a coefficient of extrusion according to the following Mathematical Formula 1, of 1 or more:

[Mathematical Formula 1]

$$\text{coefficient of extrusion} = \frac{(A + 10)}{B \times C \times D} \times 10^{10}$$

in the Mathematical Formula 1,

A is the content(wt%) of a part derived from recycled bis-2-hydroxyethylterephthalate in the polyester copolymer,
B is the content (ppmw) of residual acid in the polyester copolymer,
C is the content (ppmw) of residual recycled bis-2-hydroxyethylterephthalate in the polyester copolymer, and
D is the content(area/g) of oligomer in the polyester copolymer.

**Definition of terms**

The copolymer according to the present disclosure relates to a copolymer prepared by copolymerization of dicarboxylic acid or derivatives thereof, and diol comprising diethylene glycol and comonomers, wherein recycled bis-2-hydroxyethyl terephthalate participates in the reaction during the copolymerization process.

The term 'derived' means a certain part or unit derived from a specific compound included in the product of a chemical reaction, when the specific compound participates in the chemical reaction. Specifically, an acid part derived from dicarboxylic acid or derivatives thereof, and a diol part derived from diol respectively mean a repeat unit in polyester copolymer formed by an esterification reaction or a condensation polymerization reaction. Further, a part derived from bis-2-hydroxyethyl terephthalate means a repeat unit in polyester copolymer formed by an esterification reaction in the copolymerization reaction.

**Acid comprising dicarboxylic acid or derivatives thereof**

Dicarboxylic acid or a derivative thereof used herein means main monomers constituting polyester copolymer together with diol components. Particularly, the dicarboxylic acid comprises terephthalic acid, and by the terephthalic acid, the properties of the polyester copolymer according to the present disclosure may be improved. Further, the terephthalic acid residue may be also formed from alkyl ester of terephthalic acid, preferably dimethylterephthalic acid.

The dicarboxylic acid components may further comprise an aromatic dicarboxylic acid component, an aliphatic dicarboxylic acid component, or a mixture thereof, besides terephthalic acid. In this case, it is preferable that dicarboxylic acid components other than terephthalic acid may be included in the content of 30wt% or less, based on the total weight of the total dicarboxylic acid components.

The aromatic dicarboxylic acid component may be C8-20, preferably C8-14 aromatic dicarboxylic acid or a mixture thereof. Examples of the aromatic dicarboxylic acid may include isophthalic acid, naphthalenedicarboxylic acid such as 2,6-naphthalenedicarboxylic acid, and the like, diphenyl dicarboxylic acid, 4,4'-stilbenedicarboxylic acid, 2,5-furandicarboxylic acid, 2,5-thiophenedicarboxylic acid, and the like, but specific examples of the aromatic dicarboxylic acid are not limited thereto. The aliphatic dicarboxylic acid component may be a C4-20, preferably C4-12 aliphatic dicarboxylic acid component or a mixture thereof. Examples of the aliphatic dicarboxylic acid may include cyclohexanedicarboxylic acid such as 1,4-cyclohexanedicarboxylic acid, 1,3-cyclohexanedicarboxylic acid, and the like, linear, branched or cyclic aliphatic dicarboxylic acid components such as phthalic acid, sebacic acid, succinic acid, isodecylsuccinic acid, maleic acid, fumaric acid, adipic acid, glutaric acid and azelaic acid, and the like, but specific examples of the aliphatic dicarboxylic acid are not limited thereto.

Specifically, the acid comprising dicarboxylic acid or derivatives thereof may comprise one or more selected from the group consisting of isophthalic acid, dimethyl isophthalate, phthalic acid, dimethyl phthalate, phthalic anhydride, 2,6-naphthalene dicarboxylic acid, dimethyl 2,6-naphthalene dicarboxylate, diphenyl dicarboxylic acid, 1,4-cyclohexane dicarboxylic acid, 1,3-cyclohexane dicarboxylic acid, dimethyl 1,4-cyclohexane dicarboxylate, dimethyl 1,3-cyclohexane dicarboxylate, sebacic acid, succinic acid, isodecylsuccinic acid, maleic acid, maleic anhydride, fumaric acid, adipic acid, glutaric acid and azelaic acid, besides terephthalic acid.

**Diol**

The diol components used herein mean main monomers constituting polyester copolymer together with the above explained dicarboxylic acid or derivatives thereof. Particularly, the diol components comprise ethylene glycol and comonomers, and the comonomers are diethylene glycol, cyclohexanedimethanol, cyclohexanedimethanol derivatives, or a combination thereof. Preferably, the cyclohexanedimethanol derivative is 4-(hydroxymethyl)cyclohexylmethyl 4-(hydroxymethyl)cyclohexane carboxylate, or 4-(4-(hydroxymethyl)cyclohexylmethoxymethyl)cyclohexylmethanol. Preferably, in case the polyester resin according to the present disclosure comprises cyclohexanedimethanol derivatives, it may comprise a diol part derived from 4-(hydroxymethyl)cyclohexylmethyl 4-(hydroxymethyl)cyclohexane carboxylate and 4-(4-(hydroxymethyl)cyclohexylmethoxymethyl)cyclohexylmethanol in the content of 0.1 to 25 mol%, based on the total diol part.

Further, preferably, as the comonomers, 1,2-propanediol, 1,3-propanediol, 2-methyl-1,3-propanediol, 2-methylene-1,3-propanediol, 2-ethyl-1,3-propanediol, 2-isopropyl-1,3-propanediol, 2,2-dimethyl-1,3-propanediol, 1,4-butanediol, 2,3-butanediol, 3-methyl-1,5-pentanediol, 3-methyl-2,4-pentanediol, 1,6-hexanediol, 1,2-cyclohexanediol, 1,4-cyclohexanediol, diethylene glycol or a mixture thereof may be additionally included.

Among the comonomers, diethylene glycol is a component contributing to improvement in the color property of polyester copolymer. Preferably, the diethylene glycol residues may be included in the content of 5 to 50 moles, based on 100 moles of the total diol component residues. More preferably, the diethylene glycol residues may be included in the content of 6 moles or more, 7 moles or more, or 8 moles or more, and 45 moles or less, 40 moles or less, 35 moles or less, 30 moles or less, 25 moles or less, or 20 moles or less, based on 100 moles of the total diol component residues.

The ethylene glycol is a component contributing to improvement in the transparency and impact resistance of polyester copolymer. Preferably, the ethylene glycol residues are included in the content of 30 to 80 moles, based on 100 moles of the total diol component residues. More preferably, the ethylene glycol residues are included in the content of 35 moles or more, 40 moles or more, 45 moles or more, 50 moles or more, or 55 moles or more, and 75 moles or less, based on 100 moles of the total diol component residues.

The cyclohexanedimethanol(for example, 1,2-cyclohexanedimethanol, 1,3-cyclohexanedimethanol or 1,4-cyclohexanedimethanol) is a component contributing to improvement in the transparency and impact resistance of prepared polyester copolymer. Preferably, the cyclohexanedimethanol residues are included in the content of 5 to 40 moles, based on 100 moles of the total diol component residues. More preferably, the cyclohexanedimethanol residues are included in the content of 7 to 35 moles, based on 100 moles of the total diol component residues.

## Recycled bis-2-hydroxyethyl terephthalate

As used herein, the term 'recycled bis-2-hydroxyethyl terephthalate' means material obtained from waste plastic collected after use. As the waste plastic that can obtain the bis-2-hydroxyethyl terephthalate, PET and PETG, and the like may be mentioned. For example, bis-2-hydroxyethyl terephthalate can be obtained from PEG collected after use, by glycolysis, hydrolysis, methanolysis, and the like, and such methods are widely known in the art.

Since the recycled bis-2-hydroxyethyl terephthalate passes many chemical steps during the process of obtaining it from waste plastic, in case it is used as monomers of copolymer, product qualities may be inevitably deteriorated. Particularly, in case it is used as monomers of polyester copolymer, color quality may be deteriorated, and by-products may be generated in large quantities as described later.

Thus, this invention uses the recycled bis-2-hydroxyethyl terephthalate as the main monomers constituting the polyester copolymer according to the present disclosure, but controls such that the polyester copolymer comprises the recycled bis-2-hydroxyethyl terephthalate residues in the content of 10 to 90wt%. If the content of the recycled bis-2-hydroxyethyl terephthalate residues is less than 10wt%, the content of the above-explained diol may relatively increase, and thus, by-products derived from diol components, particularly by-products derived from ethylene glycol may increase, thus causing quality deterioration of polyester copolymer. Further, if the content of the recycled bis-2-hydroxyethyl terephthalate residues is greater than 90wt%, color quality and transparency of polyester copolymer may be deteriorated.

## Polyester copolymer

The polyester copolymer according to the present disclosure may be prepared by copolymerizing recycled bis-2-hydroxyethyl terephthalate, dicarboxylic acid or derivatives thereof, and ethylene glycol and comonomers as explained above. Wherein, the copolymerization may comprise sequentially conducting an esterification reaction (step 1) and a condensation polymerization reaction (step 2).

The esterification reaction is conducted in the presence of an esterification reaction catalyst, and esterification reaction catalysts comprising zinc-based compounds may be used. As specific examples of such zinc-based catalyst, zinc acetate, zinc acetate dihydrate, zinc chloride, zinc sulfate, zinc sulfide, zinc carbonate, zinc citrate, zinc gluconate, or a mixture thereof may be mentioned. Further, the amount of each starting material used is as explained above.

The esterification reaction may be conducted at a pressure of 0 to 10.0 kg/cm$^2$ and a temperature of 150 to 300°C. The esterification reaction conditions may be appropriately controlled according to specific properties of prepared polyester, component ratio, or process conditions, and the like. Specifically, preferable examples of the esterification reaction conditions may include a pressure of 0 to 5.0 kg/cm$^2$, more preferably 0.1 to 3.0 kg/cm$^2$; a temperature of 200 to 270°C, more preferably 240 to 260°C.

Further, the esterification reaction may be conducted batch wise or continuously, and the raw materials may be separately introduced, but it is preferable to introduce in the form of slurry in which dicarboxylic acid components and recycled bis-2-hydroxyethyl terephthalate are mixed with diol components. Further, a diol component such as isosorbide that is solid at room temperature may be dissolved in water or ethylene glycol, and then, mixed with dicarboxylic acid components such as terephthalic acid to form a slurry. Alternatively, after isosorbide is molten at 60°C or more, it may be mixed with dicarboxylic acid components such as terephthalic acid and other diol components to form a slurry. Further, water may be additionally introduced in the mixed slurry to assist in increase in the flowability of the slurry.

The condensation polymerization reaction may be conducted by reacting the esterification reaction product at a temperature of 150 to 300°C and a reduced pressure of 600 to 0.01 mmHg for 1 to 24 hours.

Such a condensation polymerization reaction may be conducted at a reaction temperature of 150 to 300°C, preferably 200 to 290°C, more preferably 260 to 280°C; and a reduced pressure of 600 to 0.01mmHg, preferably 200 to 0.05 mmHg, more preferably 100 to 0.1 mmHg. By applying reduced pressure condition to the condensation polymerization reaction, glycol, the by-product of the condensation polymerization, may be removed outside, and thus, if the reduced pressure condition of the condensation polymerization reaction does not fall within 400 to 0.01 mmHg, removal of by-products may be insufficient. Further, in case the condensation polymerization reaction is conducted outside a temperature range of 150 to 300°C, if the condensation polymerization reaction is progressed at 150°C or less, glycol, the by-products of the condensation polymerization reaction, may not be effectively removed outside, and thus, intrinsic viscosity of the final reaction product may be low, and the properties of prepared resin may be deteriorated, and if the reaction is progressed at 300°C or more, prepared polyester resin may be yellowed. Further, the condensation polymerization reaction may be progressed for a time until the intrinsic viscosity of the final reaction product reaches an appropriate level, for example, for an average residence time of 1 to 24 hours.

Further, the condensation polymerization reaction may use a condensation polymerization catalyst comprising a titanium-based compound, a germanium-based compound, an antimony-based compound, an aluminumbased compound, a tin-based compound, or a mixture thereof.

As examples of the titanium-based compound, tetraethyl titanate, acetyltripropyl titanate, tetrapropyl titanate, tetrabutyl titanate, 2-ethylhexyl titanate, octylene glycol titanate, lactate titanate, triethanolamine titanate, acetylacetonate titanate, ethylacetoaceticester titanate, isostearyl titanate, titanium dioxide, and the like may be mentioned. As examples of the germanium-based compound, germanium dioxide, germanium tetrachloride, germanium ethylene glycoxide, germanium acetate, a copolymer using them, or a mixture thereof, and the like may be mentioned. Preferably, germanium dioxide may be used, and as such germanium dioxide, both crystalline or amorphous germanium dioxide may be used, and glycol-soluble germanium dioxide may also be used.

Meanwhile, in the polyester copolymer according to the present disclosure, a coefficient of extrusion according to the Mathematical Formula 1 is 1 or more. As described in Examples later, if the extrusion coefficient is 1 or more, during extrusion processing, plate-out of roll may decrease, and outgas may decrease, and thus, extrudability may be excellent, meaning that extrusion processability is excellent. To the contrary, if the coefficient of extrusion is less than 1, during extrusion processing, plate-out may increase, thus decreasing productivity, and outgas may increase, thus affecting the quality of prepared sheets.

Preferably, the polyester copolymer according to the present disclosure has a coefficient of extrusion according to the following Mathematical Formula 1, of 1 or more, 2 or more, 3 or more, 4 or more, 5 or more, 6 or more, 7 or more, 8 or more, 9 or more, or 10 or more. Meanwhile, the higher the extrusion coefficient is, the more excellent the extrusion processability is, and thus, the upper limit is not theoretically limited, but for example, it may be 200 or less, 190 or less, 180 or less, 170 or less, 160 or less, 150 or less, 140 or less, 130 or less, 120 or less, 110 or less, or 100 or less.

Meanwhile, in the Mathematical Formula 1, to the variables A to D, numerical values except each unit are applied. For example, with regard to the variable A, in case the content of a part derived from recycled bis-2-hydroxyethylterephthalate in the polyester copolymer is 50 wt%, A is 50. The variables A to D can be obtained through the analysis of prepared polyester copolymer, and the specific method will be embodied in Examples described later.

Meanwhile, the variable D is the content (area/g) of oligomers in the polyester copolymer, and specifically, the oligomers mean small molecules having weight average molecular weight of 1,000 or less. The method for measuring the oligomer content in the polyester copolymer will be embodied in Examples described later.

Meanwhile, the polyester copolymer according to the present disclosure has an intrinsic viscosity of 0.50 to 1.0 dl/g, preferably 0.50 to 0.85 dl/g, more preferably 0.55 to 0.80 dl/g, or 0.60 to 0.80 dl/g. The measurement method of intrinsic viscosity will be specified in Examples later.

According to the present disclosure, there is also provided an article comprising the polyester copolymer.

The polyester copolymer prepared by the above-explained method may not only be in the state of a chip, pellet or powder before molding, but also be in the form of a molded article formed by a separate molding process such as extrusion or injection, and the like, for example, a film or a sheet, and preferably, a film, a heat shrink film, a sheet, a profile, or a blown film.

**[ADVANTAGEOUS EFFECTS]**

As explained, the polyester copolymer according to the present disclosure comprises recycled monomers and has excellent extrusion processability, and thus, can be applied for various articles, particularly for the preparation of films.

**[BRIEF DESCRIPTION OF DRAWINGS]**

Hereinafter, preferable examples will be presented for better understanding of the present disclosure. However, these examples are presented only for better understanding of the present disclosure, and the scope of the present disclosure is not limited thereby.

**Example 1**

In a reactor with a capacity of 10 L in which a column, and a condenser capable of cooling by water are connected, recycled bis-2-hydroxyethylterephthalate (689.8 g; hereinafter referred to as 'r-BHET'), TPA (terephthalic acid; 2554.5 g), EG (ethylene glycol; 755.4 g), CHDM (1,4-cyclohexanedimethanol; 826.4 g), and DEG (diethylene glycol; 211.1 g) were introduced, and $TiO_2$ (1.0 g) was introduced as a catalyst, phosphoric acid (1.5 g) as a stabilizer, Polysynthren Blue RLS (Clarient Inc., 0.006 g) as blue toner, and Solvaperm Red BB (Clarient Inc., 0.004 g) as red toner.

Subsequently, nitrogen was introduced in the reactor to make a pressurized state where the pressure of the reactor is 2.0 kgf/cm$^2$ higher than atmospheric pressure (absolute pressure: 2231.1 mmHg). Further, the temperature of the reactor was raised to 220°C over 90 minutes, and maintained at 220°C for 2 hours, and then, raised to 260°C over 2 hours. And then, the mixture in the reactor was observed with the naked eye, and until the mixture became transparent, while maintaining the temperature of the reactor at 260°C, an esterification reaction was progressed. During this process, by-products were discharged through the column and condenser. After the esterification reaction was completed, nitrogen inside the reactor of a pressurized state was discharged outside to lower the pressure of the reactor to atmospheric pressure, and then, the mixture in the reactor was transferred to a reactor with a capacity of 7 L where a vacuum reaction can be progressed.

Further, the pressure of the reactor was lowered from atmospheric state to 5 Torr (absolute pressure: 5 mmHg) over 30 minutes, and simultaneously, the temperature of the reactor was raised to 265°C over 1 hour, and while maintaining the pressure of the reactor at 1 Torr (absolute pressure: 1 mmHg) or less, a condensation polymerization reaction was conducted. At the beginning of the condensation polymerization reaction, a stirring speed was set rapid, but if stirring force decreases or the temperature of the reactant increases over predetermined temperature due to viscosity increase of the reactant with the progression of the condensation polymerization reaction, the stirring speed may be appropriately controlled. The condensation polymerization reaction was progressed until the intrinsic viscosity (IV) of the mixture (molten material) in the reactor became 0.70 dl/g. If the intrinsic viscosity of the mixture in the reactor reached a desired level, the mixture was discharged outside the reactor and stranded, and it was solidified with a coolant, and then, granulated such that the average weight became about 12 to 14 mg, thus preparing polyester copolymer.

**Example 2**

In a reactor with a capacity of 10 L in which a column, and a condenser capable of cooling by water are connected, r-BHET (2248.9 g), TPA (1202.5 g), EG (182.6 g), CHDM (734.8 g) were introduced, and $TiO_2$ (1.0 g) was introduced as a catalyst, phosphoric acid (1.5 g) as a stabilizer, and cobalt acetate (0.7 g) as a coloring agent.

Subsequently, nitrogen was introduced in the reactor to make a pressurized state where the pressure of the reactor is 2.0 kgf/cm$^2$ higher than atmospheric pressure (absolute pressure: 2231.1 mmHg). Further, the temperature of the reactor was raised to 220°C over 90 minutes, and maintained at 220°C for 2 hours, and then, raised to 255°C over 2 hours. And then, the mixture in the reactor was observed with the naked eye, and until the mixture became transparent, while maintaining the temperature of the reactor at 255°C, an esterification reaction was progressed. During this process, by-products were discharged through the column and condenser. After the esterification reaction was completed, nitrogen inside the reactor of a pressurized state was discharged outside to lower the pressure of the reactor to atmospheric pressure, and then, the mixture in the reactor was transferred to a reactor with a capacity of 7 L where a vacuum reaction can be progressed.

Further, the pressure of the reactor was lowered from atmospheric state to 5 Torr (absolute pressure: 5 mmHg) over 30 minutes, and simultaneously, the temperature of the reactor was raised to 285°C over 1 hour, and while maintaining the pressure of the reactor at 1 Torr (absolute pressure: 1 mmHg) or less, a condensation polymerization reaction was conducted. At the beginning of the condensation polymerization reaction, a stirring speed was set rapid, but if stirring force decreases or the temperature of the reactant increases over predetermined temperature due to viscosity increase of the reactant with the progression of the condensation polymerization reaction, the stirring speed may be appropriately controlled. The condensation polymerization reaction was progressed until the intrinsic viscosity (IV) of the mixture (molten material) in the reactor became 0.70 dl/g. If the intrinsic viscosity of the mixture in the reactor reached a desired level, the mixture was discharged outside the reactor and stranded, and it was solidified with a coolant, and then, granulated such that the average weight became about 12 to 14 mg, thus preparing polyester copolymer.

**Example 3**

In a reactor with a capacity of 10 L in which a column, and a condenser capable of cooling by water are connected, r-BHET (3291.8 g), TPA (717.1 g), EG (21.4 g), CHDM (522.5 g), DEG (311.4 g) were introduced, and $TiO_2$ (1.0 g) was introduced as a catalyst, phosphoric acid (1.5 g) as a stabilizer, Polysynthren Blue RLS (Clarient Inc., 0.007 g) as blue toner, and Solvaperm Red BB (Clarient Inc., 0.004 g) as red toner.

Subsequently, nitrogen was introduced in the reactor to make a pressurized state where the pressure of the reactor is 2.0 $kgf/cm^2$ higher than atmospheric pressure (absolute pressure: 2231.1 mmHg). Further, the temperature of the reactor was raised to 220°C over 90 minutes, and maintained at 220°C for 2 hours, and then, raised to 255°C over 2 hours. And then, the mixture in the reactor was observed with the naked eye, and until the mixture became transparent, while maintaining the temperature of the reactor at 255°C, an esterification reaction was progressed. During this process, by-products were discharged through the column and condenser. After the esterification reaction was completed, nitrogen inside the reactor of a pressurized state was discharged outside to lower the pressure of the reactor to atmospheric pressure, and then, the mixture in the reactor was transferred to a reactor with a capacity of 7 L where a vacuum reaction can be progressed.

Further, the pressure of the reactor was lowered from atmospheric state to 5 Torr (absolute pressure: 5 mmHg) over 30 minutes, and simultaneously, the temperature of the reactor was raised to 285°C over 1 hour, and while maintaining the pressure of the reactor at 1 Torr (absolute pressure: 1 mmHg) or less, a condensation polymerization reaction was conducted. At the beginning of the condensation polymerization reaction, a stirring speed was set rapid, but if stirring force decreases or the temperature of the reactant increases over predetermined temperature due to viscosity increase of the reactant with the progression of the condensation polymerization reaction, the stirring speed may be appropriately controlled. The condensation polymerization reaction was progressed until the intrinsic viscosity (IV) of the mixture (molten material) in the reactor became 0.70 dl/g. If the intrinsic viscosity of the mixture in the reactor reached a desired level, the mixture was discharged outside the reactor and stranded, and it was solidified with a coolant, and then, granulated such that the average weight became about 12 to 14 mg, thus preparing polyester copolymer.

**Example 4**

In a reactor with a capacity of 10 L in which a column, and a condenser capable of cooling by water are connected, r-BHET (4388.5 g), TPA (151.0 g), EG (45.1 g), CHDM (261.9 g), DEG (239.0 g), CHDM derivative (341.2 g; comprising i) 4-(hydroxymethyl)cyclohexylmethyl 4-(hydroxymethyl)cyclohexanecarboxylate, and ii) 4-(4-(hydroxymethyl)cyclohexylmethoxymethyl)cyclohexylmethanol at the mole ratio of 1:3) were introduced, and $GeO_2$ (1.0 g) was introduced as a catalyst, phosphoric acid (1.5 g) as a stabilizer, Clarient Inc. (0.020 g) as blue toner, and Clarient Inc. (0.008 g) as red toner.

Subsequently, nitrogen was introduced in the reactor to make a pressurized state where the pressure of the reactor is 0.5 $kgf/cm^2$ higher than atmospheric pressure (absolute pressure: 1127.8 mmHg). Further, the temperature of the reactor was raised to 220°C over 90 minutes, and maintained at 220°C for 2 hours, and then, raised to 260°C over 2 hours. And then, the mixture in the reactor was observed with the naked eye, and until the mixture became transparent, while maintaining the temperature of the reactor at 260°C, an esterification reaction was progressed. During this process, by-products were discharged through the column and condenser. After the esterification reaction was completed, nitrogen inside the reactor of a pressurized state was discharged outside to lower the pressure of the reactor to atmospheric pressure, and then, the mixture in the reactor was transferred to a reactor with a capacity of 7 L where a vacuum reaction can be progressed.

Further, the pressure of the reactor was lowered from atmospheric state to 5 Torr (absolute pressure: 5 mmHg) over 30 minutes, and simultaneously, the temperature of the reactor was raised to 275°C over 1 hour, and while maintaining the pressure of the reactor at 1 Torr (absolute pressure: 1 mmHg) or less, a condensation polymerization reaction was conducted. At the beginning of the condensation polymerization reaction, a stirring speed was set rapid, but if stirring force decreases or the temperature of the reactant increases over predetermined temperature due to viscosity increase of the reactant with the progression of the condensation polymerization reaction, the stirring speed may be appropriately controlled. The condensation polymerization reaction was progressed until the intrinsic viscosity (IV) of the mixture (molten material) in the reactor became 0.80 dl/g. If the intrinsic viscosity of the mixture in the reactor reached a desired level, the mixture was discharged outside the reactor and stranded, and it was solidified with a coolant, and then, granulated such that the average weight became about 12 to 14 mg, thus preparing polyester copolymer.

**Example 5**

In a reactor with a capacity of 10 L in which a column, and a condenser capable of cooling by water are connected, r-BHET (1005.9 g), DMT (dimethyl terephthalate; 2304.9 g), EG (874.1 g), CHDM (707.2 g), DEG (231.3 g) were introduced, and Mn(II) acetate tetrahydrate (1.5 g) and $Sb_2O_3$ (1.8 g) were introduced as a catalyst, and cobalt acetate (0.6 g) was introduced as a coloring agent.

Subsequently, nitrogen was introduced in the reactor to make a pressurized state where the pressure of the reactor is 0.1 $kgf/cm^2$ higher than atmospheric pressure (absolute pressure: 833.6 mmHg). Further, the temperature of the reactor was raised to 220°C over 90 minutes, and maintained at 220°C for 2 hours, and then, raised to 240°C over 2 hours. And then, the mixture in the reactor was observed with the naked eye, and until the mixture became transparent, while maintaining the temperature of the reactor at 240°C, an esterification reaction was progressed. During this process, by-products were discharged through the column and condenser. After the esterification reaction was completed, nitrogen inside the reactor of a pressurized state was discharged outside to lower the pressure of the reactor to atmospheric pressure, and then, the mixture in the reactor was transferred to a reactor with a capacity of 7 L where a vacuum reaction can be progressed.

Further, the pressure of the reactor was lowered from atmospheric state to 5 Torr (absolute pressure: 5 mmHg) over 30 minutes, and simultaneously, the temperature of the reactor was raised to 265°C over 1 hour, and while maintaining the pressure of the reactor at 1 Torr (absolute pressure: 1 mmHg) or less, a condensation polymerization reaction was conducted. At the beginning of the condensation polymerization reaction, a stirring speed was set rapid, but if stirring force decreases or the temperature of the reactant increases over predetermined temperature due to viscosity increase of the reactant with the progression of the condensation polymerization reaction, the stirring speed may be appropriately controlled. The condensation polymerization reaction was progressed until the intrinsic viscosity (IV) of the mixture (molten material) in the reactor became 0.70 dl/g. If the intrinsic viscosity of the mixture in the reactor reached a desired level, the mixture was discharged outside the reactor and stranded, and it was solidified with a coolant, and then, granulated such that the average weight became about 12 to 14 mg, thus preparing polyester copolymer.

**Example 6**

In a reactor with a capacity of 10 L in which a column, and a condenser capable of cooling by water are connected, r-BHET (2283.5 g), TPA (1221.0 g), IPA (isophthalic acid; 1492.4 g), EG (185.5 g), CHDM (746.2 g) were introduced, and $GeO_2$ (1.0 g) was introduced as a catalyst.

Subsequently, nitrogen was introduced in the reactor to make a pressurized state where the pressure of the reactor is 2.0 $kgf/cm^2$ higher than atmospheric pressure (absolute pressure: 2231.1 mmHg). Further, the temperature of the reactor was raised to 220°C over 90 minutes, and maintained at 220°C for 2 hours, and then, raised to 255°C over 2 hours. And then, the mixture in the reactor was observed with the naked eye, and until the mixture became transparent, while maintaining the temperature of the reactor at 255°C, an esterification reaction was progressed. During this process, by-products were discharged through the column and condenser. After the esterification reaction was completed, nitrogen inside the reactor of a pressurized state was discharged outside to lower the pressure of the reactor to atmospheric pressure, and then, the mixture in the reactor was transferred to a reactor with a capacity of 7 L where a vacuum reaction can be progressed.

Further, the pressure of the reactor was lowered from atmospheric state to 5 Torr (absolute pressure: 5 mmHg) over 30 minutes, and simultaneously, the temperature of the reactor was raised to 285°C over 1 hour, and while maintaining the pressure of the reactor at 1 Torr (absolute pressure: 1 mmHg) or less, a condensation polymerization reaction was conducted. At the beginning of the condensation polymerization reaction, a stirring speed was set rapid, but if stirring force decreases or the temperature of the reactant increases over predetermined temperature due to viscosity increase of the reactant with the progression of the condensation polymerization reaction, the stirring speed may be appropriately controlled. The condensation polymerization reaction was progressed until the intrinsic viscosity (IV) of the mixture (molten material) in the reactor became 0.70 dl/g. If the intrinsic viscosity of the mixture in the reactor reached a desired level, the mixture was discharged outside the reactor and stranded, and it was solidified with a coolant, and then, granulated such that the average weight became about 12 to 14 mg, thus preparing polyester copolymer.

**Comparative Example 1**

In a reactor with a capacity of 10 L in which a column, and a condenser capable of cooling by water are connected, TPA (3005.3 g), EG (1088.8 g), CHDM (834.3 g), DEG (211.1 g) were introduced, and $TiO_2$ (1.0 g) was introduced as a catalyst, and phosphoric acid (1.5 g) as a stabilizer.

Subsequently, nitrogen was introduced in the reactor to make a pressurized state where the pressure of the reactor is 2.0 $kgf/cm^2$ higher than atmospheric pressure (absolute pressure: 2231.1 mmHg). Further, the temperature of the reactor was raised to 220°C over 90 minutes, and maintained at 220°C for 2 hours, and then, raised to 255°C over 2 hours. And then, the mixture in the reactor was observed with the naked eye, and until the mixture became transparent, while maintaining the temperature of the reactor at 255°C, an esterification reaction was progressed. During this process, by-products were discharged through the column and condenser. After the esterification reaction was completed, nitrogen inside the reactor of a pressurized state was discharged outside to lower the pressure of the reactor to atmospheric pressure, and then, the mixture in the reactor was transferred to a reactor with a capacity of 7 L where a vacuum reaction can be progressed.

Further, the pressure of the reactor was lowered from atmospheric state to 5 Torr (absolute pressure: 5 mmHg) over 30 minutes, and simultaneously, the temperature of the reactor was raised to 285°C over 1 hour, and while maintaining the pressure of the reactor at 1 Torr (absolute pressure: 1 mmHg) or less, a condensation polymerization reaction was conducted. At the beginning of the condensation polymerization reaction, a stirring speed was set rapid, but if stirring force decreases or the temperature of the reactant increases over predetermined temperature due to viscosity increase of the reactant with the progression of the condensation polymerization reaction, the stirring speed may be appropriately controlled. The condensation polymerization reaction was progressed until the intrinsic viscosity (IV) of the mixture (molten material) in the reactor became 0.70 dl/g. If the intrinsic viscosity of the mixture in the reactor reached a desired level, the mixture was discharged outside the reactor and stranded, and it was solidified with a coolant, and then, granulated such that the average weight became about 12 to 14 mg, thus preparing polyester copolymer.

**Comparative Example 2**

In a reactor with a capacity of 10 L in which a column, and a condenser capable of cooling by water are connected, TPA (2780.6 g), EG (1495.5 g), CHDM (241.2 g), DEG (159.8 g), CHDM derivatives (341.2 g; comprising i) 4-(hydroxymethyl)cyclohexylmethyl 4-(hydroxymethyl)cyclohexanecarboxylate, and ii) 4-(4-(hydroxymethyl)cyclohexylmethoxymethyl)cyclohexylmethanol at the mole ratio of 1:3) were introduced, and $TiO_2$ (1.0 g) was introduced as a catalyst, phosphoric acid (1.5 g) as a stabilizer, and cobalt acetate (0.7 g) as a coloring agent.

Subsequently, nitrogen was introduced in the reactor to make a pressurized state where the pressure of the reactor is 2.0 kgf/cm$^2$ higher than atmospheric pressure (absolute pressure: 2231.1 mmHg). Further, the temperature of the reactor was raised to 220°C over 90 minutes, and maintained at 220°C for 2 hours, and then, raised to 255°C over 2 hours. And then, the mixture in the reactor was observed with the naked eye, and until the mixture became transparent, while maintaining the temperature of the reactor at 255°C, an esterification reaction was progressed. During this process, by-products were discharged through the column and condenser. After the esterification reaction was completed, nitrogen inside the reactor of a pressurized state was discharged outside to lower the pressure of the reactor to atmospheric pressure, and then, the mixture in the reactor was transferred to a reactor with a capacity of 7 L where a vacuum reaction can be progressed.

Further, the pressure of the reactor was lowered from atmospheric state to 5 Torr (absolute pressure: 5 mmHg) over 30 minutes, and simultaneously, the temperature of the reactor was raised to 260°C over 1 hour, and while maintaining the pressure of the reactor at 1 Torr (absolute pressure: 1 mmHg) or less, a condensation polymerization reaction was conducted. At the beginning of the condensation polymerization reaction, a stirring speed was set rapid, but if stirring force decreases or the temperature of the reactant increases over predetermined temperature due to viscosity increase of the reactant with the progression of the condensation polymerization reaction, the stirring speed may be appropriately controlled. The condensation polymerization reaction was progressed until the intrinsic viscosity (IV) of the mixture (molten material) in the reactor became 0.85 dl/g. If the intrinsic viscosity of the mixture in the reactor reached a desired level, the mixture was discharged outside the reactor and stranded, and it was solidified with a coolant, and then, granulated such that the average weight became about 12 to 14 mg, thus preparing polyester copolymer.

**Comparative Example 3**

In a reactor with a capacity of 10 L in which a column, and a condenser capable of cooling by water are connected, TPA (3631.3 g), EG (2780.3 g), DEG (159.7 g) were introduced, and $GeO_2$ (1.0 g) as a catalyst, and phosphoric acid (1.5 g) as a stabilizer.

Subsequently, nitrogen was introduced in the reactor to make a pressurized state where the pressure of the reactor is 1.0 kgf/cm$^2$ higher than atmospheric pressure (absolute pressure: 1495.6 mmHg). Further, the temperature of the reactor was raised to 220°C over 90 minutes, and maintained at 220°C for 2 hours, and then, raised to 265°C over 2 hours. And then, the mixture in the reactor was observed with the naked eye, and until the mixture became transparent, while maintaining the temperature of the reactor at 255°C, an esterification reaction was progressed. During this process, by-products were discharged through the column and condenser. After the esterification reaction was completed, nitrogen inside the reactor of a pressurized state was discharged outside to lower the pressure of the reactor to atmospheric pressure, and then, the mixture in the reactor was transferred to a reactor with a capacity of 7 L where a vacuum reaction can be progressed.

Further, the pressure of the reactor was lowered from atmospheric state to 5 Torr (absolute pressure: 5 mmHg) over 30 minutes, and simultaneously, the temperature of the reactor was raised to 275°C over 1 hour, and while maintaining the pressure of the reactor at 1 Torr (absolute pressure: 1 mmHg) or less, a condensation polymerization reaction was conducted. At the beginning of the condensation polymerization reaction, a stirring speed was set rapid, but if stirring force decreases or the temperature of the reactant increases over predetermined temperature due to viscosity increase of the reactant with the progression of the condensation polymerization reaction, the stirring speed may be appropriately controlled. The condensation polymerization reaction was progressed until the intrinsic viscosity (IV) of the mixture (molten material) in the reactor became 0.60 dl/g. If the intrinsic viscosity of the mixture in the reactor reached a desired level, the mixture was discharged outside the reactor and stranded, and it was solidified with a coolant, and then, granulated such that the average weight became about 12 to 14 mg, thus preparing polyester copolymer.

**Comparative Example 4**

In a reactor with a capacity of 10 L in which a column, and a condenser capable of cooling by water are connected, TPA (2300.2 g), NPG (neopentyl glycol; 158.0 g), DEG (202.3 g) were introduced, and $GeO_2$ (1.0 g) as a catalyst, and phosphoric acid (1.5 g) as a stabilizer.

Subsequently, nitrogen was introduced in the reactor to make a pressurized state where the pressure of the reactor is 2.0 kgf/cm$^2$ higher than atmospheric pressure (absolute pressure: 2231.1 mmHg). Further, the temperature of the reactor was raised to 220°C over 90 minutes, and maintained at 220°C for 2 hours, and then, raised to 265°C over 2 hours. And then, the mixture in the reactor was observed with the naked eye, and until the mixture became transparent, while maintaining the temperature of the reactor at 255°C, an esterification reaction was progressed. During this process, by-products were discharged through the column and condenser. After the esterification reaction was completed, nitrogen inside the reactor of a pressurized state was discharged outside to lower the pressure of the reactor to atmospheric pressure, and then, the mixture in the reactor was transferred to a reactor with a capacity of 7 L where a vacuum reaction can be progressed.

Further, the pressure of the reactor was lowered from atmospheric state to 5 Torr (absolute pressure: 5 mmHg) over 30 minutes, and simultaneously, the temperature of the reactor was raised to 280°C over 1 hour, and while maintaining the pressure of the reactor at 1 Torr (absolute pressure: 1 mmHg) or less, a condensation polymerization reaction was conducted. At the beginning of the condensation polymerization reaction, a stirring speed was set rapid, but if stirring force decreases or the temperature of the reactant increases over predetermined temperature due to viscosity increase of the reactant with the progression of the condensation polymerization reaction, the stirring speed may be appropriately controlled. The condensation polymerization reaction was progressed until the intrinsic viscosity (IV) of the mixture (molten material) in the reactor became 0.70 dl/g. If the intrinsic viscosity of the mixture in the reactor reached a desired level, the mixture was discharged outside the reactor and stranded, and it was solidified with a coolant, and then, granulated such that the average weight became about 12 to 14 mg, thus preparing polyester copolymer.

**Experimental Example**

For the copolymers prepared in Examples and Comparative Examples, the properties were evaluated as follows.

**1) Residue composition**

A composition (wt%) derived from r-BHET and a composition (mol%) derived from diol in polyester resin were confirmed through 1H-NMR spectrum obtained at 25°C using nuclear magnetic resonance device (JEOL, 600MHz FT-NMR), after dissolving a sample in a $CDCl_3$ solvent at the concentration of 3 mg/mL. Wherein, the residue composition derived from diol was analyzed as the mol% of residues derived from each specific diol (DEG and CHDM) to the total composition of all residues derived from diol.

**2) Intrinsic viscosity**

Intrinsic viscosity was measured using Ubbelohde viscometer in a 35°C thermostat, after dissolving polyester copolymer in 150°C orthochlorophenol (OCP) at the concentration of 0.12%. Specifically, the temperature of the tube viscometer was maintained at 35°C, and a time $t_0$ (efflux time) taken for the solvent to pass between specific internal sections of the tube viscometer, and a time t taken for the solution to pass therebetween were calculated. And then, the $t_0$ value and t value were substituted into Equation 1 to calculate specific viscosity, and the specific viscosity value was substituted into Equation 2 to calculate intrinsic viscosity.

[Equation 1]

$$\eta_{sp} = \frac{t - t_0}{t_0}$$

[Equation 2]

$$[\eta] = \frac{\sqrt{1 + 4A\eta_{sp}} - 1}{2Ac}$$

**3) HPLC / residual acid, BHET measurement**

High-performance liquid chromatography was used for measurement. Specifically, in order to quantify unreacted and residual acid and diol in pellet samples, residual monomers (TPA, DMT, BHET, IPA, and the like) were extracted by reprecipitation.

A standard solution for HPLC was diluted to the sample range of a calibration curve, by dissolving 0.01 g of monomers to be quantified (TPA, BHET, DMT, IPA, and the like) in 20 mL of MeOH (500 $\mu$g/mL), and then, serially diluting with MeOH. For the pre-treatment of a sample, about 0.1 g of pellet samples were dissolved in 1 mL of HFIP (shaker 180 rpm, stirring for 1 hour or more), and after confirming that they were completely dissolved, 3 ml of MeOH was put to reprecipitate.

Further, in order to apply liquid chromatography mass spectrometry, a mobile phase should be set, and thus, distilled water and $H_3PO_4$ were mixed to prepare a mobile phase A with pH 2, and acetonitrile was used as a mobile phase B. HPLC measurement conditions are summarized as follows.

- Maker: Mightysil C18 (4.0*250mm), (5 $\mu$m)
- Mobile phase: $H_2O$ & $H_3PO_4$ / acetonitrile (Gradient)
- Flow rate: 1.2 ml / min
- Wavelength for detection: 242 nm
- Retention time: about 30 min
- Injection volume: 10 um

After plotting a calibration curve with the standard solution, a coefficient of correlation ($r^2$) was calculated. A linearity was confirmed when analyzing the accuracy/precision degree. In order to meet acceptable standard, a deviation from the theoretical value should be within 20% at the lower limit of quantification, and a deviation from the theoretical value should be within 15% at the concentrations other than lower limit of quantification, and $r^2$(coefficient of correlation) should be 0.98 or more.

**4) GC total area/g**

For quantitative analysis of oligomers and single molecules by pyrolysis, gas chromatography was used to collect gas material generated under the following pre-treatment conditions, and converted into total area/g of the graph.

When heating pellet samples under pre-treatment conditions of 260°C, air atmosphere for 1 hour, generated materials were collected in a GC head space, and the total area of the collected materials was quantified (unit area/g). The higher total area/g means that a large quantity of unreacted materials and oligomers exist in the pellet, and also indicates that single molecules generated by pyrolysis increase. The area/g of oligomers detected in GC means materials commonly having a molecular weight of 1000 or less. GC measurement conditions are summarized as follows.

GC apparatus conditions

- Model: Triplus 500 (Thermo)
- Incubation temperature: 260°C
- Incubation time: 60 min
- Loop temperature: 260°C

- Loop volume: 1 mL
- Injection time: 0.5 min
- Injection mode: standard

**5) Coefficient of extrusion**

The above explained data and the Mathematical Formula 1 as described herein were applied to measure a coefficient of extrusion.

**6) Extrudability**

6-1) Evaluation of plate-out

Using Breyer equipment with the following spec., samples according to Examples and Comparative Examples were extruded and evaluated.

- Supplier: Breyer GmbH (Germany, December, 2000)
- Main extruder: Single screw extruder with or without venting section
- Diameter: 45 mm
- L/D: 33:1

The samples were extruded at 260°C to a sheet having a thickness of 0.25 ~ 1 mm, and 1 hour after sheet extrusion began, sensory evaluation of plate-out for a roll being extruded was conducted. By the sensory evaluation, a pollution degree of the roll after sheet extrusion was evaluated as follows.

- X: No pollution of roll after sheet extrusion
- Δ: Slight generation of roll pollution after sheet extrusion
- O: Pollution of roll after sheet extrusion

As unreacted monomers, residual monomers, and oligomers (total area/g) generated by pyrolysis exist more in the samples prepared in Examples and Comparative Examples, single molecules generated during sheet extrusion increase, which increase a pollution degree of the roll, thereby causing quality and productivity deterioration during sheet extrusion.

6-2) Evaluation of out-gas generation

Using the same equipment, samples prepared in Examples and Comparative Examples were extruded and evaluated, and after each pellet passed through an extruder, sensory evaluation for out-gas generated when the pellet was compressed to a roll was progressed.

- O: No out gas generated / confirmed 6 times at an interval of 10 minutes
- O: Little out gas generated
- Δ: Slight generation of out gas
- X: Continuous generation of out gas

**7) Drawability**

In order to evaluate the quality of extruded sheet, the polyester film (0.25 um) prepared above were cut to a square of 10 cm x 10 cm, and drawing was progressed at a draw ratio (DR) of MD:TD=1:5, while reheating to a draw temperature of 75 to 95°C.
If the quality of the polyester film is degraded, the surface of the film may not be uniform, and if fish eye is generated in the drawn film, the part where fish eye is generated may be non-uniformly drawn, which has an influence on the quality of the drawn film, thus rendering it difficult to secure desired shrinkage of the drawn film.
The polyester sheet prepared above was cut to a square of 10 cm x 10 cm, and sensory evaluation of fish eye was progressed with the naked eye in the film drawn to a draw ratio(DR) of MD:TD=1:5.

- X: Little fish eye

- Δ: Slight generation of fish eye

- O: Non-uniform drawing

The above results were shown in the following Table 1.

[Table 1]

| | | Unit | Example | | | | | | Comparative Example | | | |
|---|---|---|---|---|---|---|---|---|---|---|---|---|
| | | | 1 | 2 | 3 | 4 | 5 | 6 | 1 | 2 | 3 | 4 |
| r-BHET | | wt% | 14 | 50 | 63 | 81 | 21 | 50 | 0 | 0 | 0 | 0 |
| DEG | | mol% | 8 | 0 | 13 | 11.5 | 8 | 13 | 8 | 11.5 | 0 | 15 |
| CHDM | | mol% | 31 | 31 | 20 | 14.5 | 31 | 20 | 31 | 14.5 | 0 | 0 |
| Intrinsic viscosity | | dg/l | 0.7 | 0.7 | 0.7 | 0.8 | 0.7 | 0.7 | 0.7 | 0.85 | 0.6 | 0.7 |
| HPLC | residual acid | ppm w | 10.3 | 6.1 | 4.4 | 1.9 | 9.5 | 5.0 | 12 | 10 | 20 | 25 |
| | residual BHET | ppm w | 75 | 70 | 86 | 50 | 90 | 99 | 100 | 120 | 107 | 110 |
| GC | Oligomer | Area/ g | 7.8.E+ 07 | 7.3.E+ 07 | 7.2.E+ 07 | 6.9.E+ 07 | 7.7.E+ 07 | 7.3.E+ 07 | 8.2.E+ 08 | 7.8.E+ 08 | 1.0.E+ 09 | 1.5.E+ 09 |
| Coefficient of extrusion | | - | 3.92 | 19.13 | 27.11 | 134.89 | 4.72 | 16.72 | 0.10 | 0.11 | 0.05 | 0.02 |
| Extruda bility | Roll Plate-out | - | X | X | X | X | X | X | Δ | Δ | ○ | ○ |
| | extrusion outgas decrease | - | ○ | Θ | Θ | Θ | ○ | Θ | Δ | Δ | X | X |
| Drawab ility | Fish eye | - | X | X | X | X | X | X | Δ | Δ | ○ | ○ |

**Claims**

1. Polyester copolymer polymerized from

   1) recycled bis-2-hydroxyethylterephthalate,
   2) acid comprising dicarboxylic acid or derivatives thereof, and
   3) diol comprising ethylene glycol and comonomers, and
   having a structure in which a part derived from the bis-2-hydroxyethylterephthalate, an acid part derived from the dicarboxylic acid or derivatives thereof, and a diol part derived from the diol are repeated,
   wherein the polyester copolymer has a coefficient of extrusion according to the following Mathematical Formula 1, of 1 or more:

   [Mathematical Formula 1]

   $$\text{coefficient of extrusion} = \frac{(A + 10)}{B \times C \times D} \times 10^{10}$$

   in the Mathematical Formula 1,

   A is the content(wt%) of a part derived from recycled bis-2-hydroxyethylterephthalate in the polyester copolymer,
   B is the content(ppmw) of residual acid in the polyester copolymer,
   C is the content(ppmw) of residual recycled bis-2-hydroxyethylterephthalate in the polyester copolymer, and
   D is the content(area/g) of oligomers in the polyester copolymer.

2. The polyester copolymer according to claim 1, wherein the polyester copolymer comprises the part derived from recycled bis-2-hydroxyethylterephthalate in the content of 10 to 90 wt%.

3. The polyester copolymer according to claim 1, wherein the comonomers are diethylene glycol, cyclohexanedimethanol, a cyclohexanedimethanol derivative, or a combination thereof.

4. The polyester copolymer according to claim 3, wherein the cyclohexanedimethanol derivative is 4-(hydroxymethyl)cyclohexylmethyl 4-(hydroxymethyl)cyclohexanecarboxylate, or 4-(4-(hydroxymethyl)cyclohexylmethoxymethyl)cyclohexylmethanol.

5. The polyester copolymer according to claim 1, wherein the comonomers further comprises 1,2-propanediol, 1,3-propanediol, 2-methyl-1,3-propanediol, 2-methylene-1,3-propanediol, 2-ethyl-1,3-propanediol, 2-isopropyl-1,3-propanediol, 2,2-dimethyl-1,3-propanediol, 1,4-butanediol, 2,3-butanediol, 3-methyl-1,5-pentanediol, 3-methyl-2,4-pentanediol, 1,6-hexanediol, 1,2-cyclohexanediol, 1,4-cyclohexanediol, diethylene glycol or mixtures thereof.

6. The polyester copolymer according to claim 1, wherein the acid comprising dicarboxylic acid or derivatives thereof comprises terephthalic acid.

7. The polyester copolymer according to claim 6, wherein the acid comprising dicarboxylic acid or derivatives thereof comprises one or more selected from the group consisting of isophthalic acid, dimethyl isophthalate, phthalic acid, dimethyl phthalate, phthalic anhydride, 2,6-naphthalene dicarboxylic acid, dimethyl 2,6-naphthalene dicarboxylate, diphenyl dicarboxylic acid, 1,4-cyclohexane dicarboxylic acid, 1,3-cyclohexane dicarboxylic acid, dimethyl 1,4-cyclohexane dicarboxylate, dimethyl 1,3-cyclohexane dicarboxylate, sebacic acid, succinic acid, isodecylsuccinic acid, maleic acid, maleic anhydride, fumaric acid, adipic acid, glutaric acid and azelaic acid.

8. The polyester copolymer according to claim 1, wherein the coefficient of extrusion is 3 or more.

9. The polyester copolymer according to claim 1, wherein the polyester copolymer has an intrinsic viscosity of 0.50 to 1.0 dl/g.

10. An article comprising the polyester copolymer according to any one of claims 1 to 9.

**11.** The article according to claim 10, wherein the article is a film, a heat shrink film, a sheet, a profile or a blown film.

## INTERNATIONAL SEARCH REPORT

International application No.

**PCT/KR2022/013303**

| A. | CLASSIFICATION OF SUBJECT MATTER |
| --- | --- |

**C08G 63/00**(2006.01)i; **C08L 67/03**(2006.01)i; **C08J 5/18**(2006.01)i

According to International Patent Classification (IPC) or to both national classification and IPC

| B. | FIELDS SEARCHED |
| --- | --- |

Minimum documentation searched (classification system followed by classification symbols)

C08G 63/00(2006.01); C07C 67/52(2006.01); C07C 69/82(2006.01); C08G 63/16(2006.01); C08G 63/78(2006.01); D01D 5/34(2006.01); D01F 8/14(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 재사용 비스-2-히드록시에틸테레프탈레이트(recycled bis-2-hydroxyethylene terephthalate, BHET), 디카르복실산(dicarboxylic acid), 에틸렌 글리콜(ethylene glycol), 공단량체(comonomer), 디올(diol), 공중합(copolymerization), 폴리에스테르(polyester)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | KR 10-2020-0061948 A (LOTTE CHEMICAL CORPORATION) 03 June 2020 (2020-06-03)<br>See claims 5-7; paragraphs [0037]-[0069]; and manufacturing example 1. | 1-11 |
| A | US 2004-0019234 A1 (INADA, S. et al.) 29 January 2004 (2004-01-29)<br>See entire document. | 1-11 |
| A | KR 10-0490000 B1 (AIES CO., LTD.) 17 May 2005 (2005-05-17)<br>See entire document. | 1-11 |
| A | KR 10-2014-0009117 A (TORAY INDUSTRIES, INC.) 22 January 2014 (2014-01-22)<br>See entire document. | 1-11 |
| A | KR 10-2012-0133548 A (WOONGJIN CHEMICAL CO., LTD.) 11 December 2012 (2012-12-11)<br>See entire document. | 1-11 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **26 December 2022** | **27 December 2022** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

<div align="center">

**INTERNATIONAL SEARCH REPORT**
**Information on patent family members**

</div>

International application No.

**PCT/KR2022/013303**

| Patent document cited in search report | | | Publication date (day/month/year) | Patent family member(s) | | | Publication date (day/month/year) |
|---|---|---|---|---|---|---|---|
| KR | 10-2020-0061948 | A | 03 June 2020 | None | | | |
| US | 2004-0019234 | A1 | 29 January 2004 | CN | 1195727 | C | 06 April 2005 |
| | | | | CN | 1320113 | A | 31 October 2001 |
| | | | | CN | 1511821 | A | 14 July 2004 |
| | | | | CN | 1511823 | A | 14 July 2004 |
| | | | | EP | 1120394 | A1 | 01 August 2001 |
| | | | | EP | 1120394 | A4 | 24 July 2002 |
| | | | | EP | 1120394 | B1 | 08 September 2004 |
| | | | | JP | 2001-048837 | A | 20 February 2001 |
| | | | | KR | 10-0701842 | B1 | 02 April 2007 |
| | | | | KR | 10-0740059 | B1 | 16 July 2007 |
| | | | | KR | 10-0740060 | B1 | 16 July 2007 |
| | | | | KR | 10-2001-0086254 | A | 10 September 2001 |
| | | | | KR | 10-2006-0107858 | A | 16 October 2006 |
| | | | | KR | 10-2006-0107859 | A | 16 October 2006 |
| | | | | US | 6630601 | B1 | 07 October 2003 |
| | | | | US | 7193104 | B2 | 20 March 2007 |
| | | | | WO | 01-10812 | A1 | 15 February 2001 |
| | | | | WO | 01-10812 | A9 | 26 April 2001 |
| KR | 10-0490000 | B1 | 17 May 2005 | CN | 1133681 | C | 07 January 2004 |
| | | | | CN | 1327459 | A | 19 December 2001 |
| | | | | EP | 1156069 | A1 | 21 November 2001 |
| | | | | EP | 1156069 | A4 | 18 June 2003 |
| | | | | EP | 1156069 | B1 | 31 May 2006 |
| | | | | JP | 3595304 | B2 | 02 December 2004 |
| | | | | KR | 10-2001-0101251 | A | 14 November 2001 |
| | | | | US | 6350851 | B1 | 26 February 2002 |
| | | | | WO | 01-29110 | A1 | 26 April 2001 |
| KR | 10-2014-0009117 | A | 22 January 2014 | CN | 103189415 | A | 03 July 2013 |
| | | | | CN | 103189415 | B | 15 April 2015 |
| | | | | EP | 2615123 | A1 | 17 July 2013 |
| | | | | EP | 2615123 | A4 | 07 December 2016 |
| | | | | EP | 2615123 | B1 | 17 July 2019 |
| | | | | EP | 2615123 | B9 | 13 November 2019 |
| | | | | JP | 5790506 | B2 | 07 October 2015 |
| | | | | KR | 10-1783293 | B1 | 29 September 2017 |
| | | | | US | 2013-0253165 | A1 | 26 September 2013 |
| | | | | US | 9273182 | B2 | 01 March 2016 |
| | | | | WO | 2012-032876 | A1 | 15 March 2012 |
| KR | 10-2012-0133548 | A | 11 December 2012 | KR | 10-1303819 | B1 | 04 September 2013 |

Form PCT/ISA/210 (patent family annex) (July 2022)